# FASCICULE DE BREVET EUROPEEN

(11) **EP 0 636 306 B1**
(45) Date de publication et mention de la délivrance du brevet: **24.09.1997**
(21) Numéro de dépôt: 94401571.8
(22) Date de dépôt: 07.07.1994
(51) Int. Cl.: A01C 7/04

(54) **Boîtier de distribution pour semoir monograine mécanique**
Verteilungskasten für eine mechanische Einzelkörnersämaschine
Distributer for a mechanical precision seed drill

(30) Priorité: 26.07.1993 FR 9309176
(43) Date de publication de la demande: 01.02.1995
(73) Titulaire: ATELIERS RIBOULEAU, F-79240 Largeasse (FR)
(72) Inventeur: Ribouleau, Michel, Robert, Jean, Henri, F-75014 Paris (FR)
(74) Mandataire: Lanceplaine, Jean-Claude

(56) Documents cités:
- EP-A- 0 026 926
- EP-A- 0 380 912
- DE-B- 1 283 589

## Description

L'invention concerne les boîtiers de distribution pour les semoirs monograine de type mécanique.

Pour chaque rang, on prévoit un boîtier de distribution qui comporte une trémie d'alimentation en graines reliée à un carter fixe délimité par un fond sensiblement vertical et une paroi cylindrique. Un rotor est monté coaxialement à rotation dans ce carter et comporte une couronne cylindrique périphérique qui est dirigée vers l'intérieur du carter et dans laquelle sont aménagées des alvéoles destinées à recevoir chacune une graine. Ces alvéoles débouchent, d'une part, à l'extérieur de ladite couronne et, d'autre part à l'intérieur de cette couronne; les graines logées dans les alvéoles effectuent un trajet circulaire comportant une phase de montée, une phase de descente et une phase d'éjection par une ouverture située au bas du carter. De tels semoirs sont décrits en particulier dans le brevet français 1 492 963 et son addition 95 940 et dans le modèle d'utilité allemand 75 39 067 et montrent les caractéristiques du préambule de la revendication 1.

Les semoirs monograines sont des semoirs de précision qui permettent de réaliser des semis avec des espacements entre graines très réguliers. La couronne du rotor facilite le remplissage des alvéoles même pour une vitesse de rotation élevée qui est nécessaire pour annuler la vitesse d'avancement.

Pour éviter les doubles graines dans une alvéole, on prévoit un dispositif de sélection sur le parcours de la graine dans l'alvéole. Ce dispositif de sélection est destiné à expulser les doubles graines et il est constitué par exemple par une rampe ou par une brosse généralement disposés dans la partie supérieure du carter, c'est-à-dire au sommet du trajet des graines.

Ces semoirs de précision permettent d'obtenir de très bons résultats lorsque les graines sont bien calibrées, de forme régulière et sphérique, comme c'est le cas en particulier pour les graines de betteraves enrobées. En effet, de telles graines s'adaptent bien aux dimensions des alvéoles et le nombre de manques ou de doubles graines dans les alvéoles est très faible.

Par contre, lorsque la forme des semences est irrégulière ou mal adaptée, les graines s'introduisent soit par deux, soit incomplètement dans les alvéoles et l'on constate alors de nombreuses graines cassées car les dispositifs de sélection, du type rampe ou à brosse, ont une action trop brutale et ne sont pas suffisamment efficaces.

La présente invention se propose de fournir un boîtier de distribution pour semoir monograine qui permet de réaliser une sélection, c'est-à-dire une élimination des graines en surnombre dans les alvéoles, efficace qu'elle que soit la forme des semences.

A cet effet, l'invention a pour objet un boîtier de distribution pour semoir monograine mécanique, du type comportant un carter fixe délimité par un fond sensiblement vertical et une paroi cylindrique et un rotor disposé dans ledit carter au niveau de ladite paroi cylindrique et monté à rotation dans ce dernier, ledit rotor comportant une couronne cylindrique périphérique dirigée vers l'intérieur du carter et dans laquelle sont aménagées des alvéoles destinées à recevoir chacune une graine et débouchant, d'une part, à l'extérieur de ladite couronne et, d'autre part, à l'intérieur de ladite couronne, caractérisé en ce qu'il comporte un élément présentant la forme générale d'un disque coaxial audit rotor et fixé entre ledit rotor et le fond du carter, en ce que le carter présente, sur une partie de sa périphérie, une face d'appui intérieure périphérique raccordée à ladite paroi cylindrique, orthogonale à cette dernière et sur laquelle s'appuie ledit disque, en ce que le diamètre externe dudit disque est inférieur au diamètre interne du carter au niveau de ladite face d'appui, de manière à délimiter avec ladite face d'appui et ladite paroi cylindrique du carter un canal annulaire recevant la couronne cylindrique du rotor, en ce que ledit disque présente une échancrure dans sa partie disposée dans la zone de montée des graines bloquées dans les alvéoles, et en ce que l'on prévoit, au niveau de l'extrémité de sortie de ladite échancrure, un dispositif de sélection destiné à expulser les graines supplémentaires entraînées par les alvéoles.

La présence du disque fixe permet de réaliser un bon guidage de la couronne du rotor comportant les alvéoles; le dispositif de sélection disposé au début du canal annulaire de guidage des graines a une très bonne efficacité et il agit sans brutalité sur les graines.

Selon un mode de réalisation de l'invention, ledit dispositif de sélection est aménagé sur le disque. Avantageusement il est constitué par une rampe de pente sensiblement perpendiculaire au rayon du disque, s'étendant du bord de sortie de l'échancrure sur la face du disque tournée vers le rotor vers la face du disque tournée vers le carter, de manière à présenter une arête sensiblement radiale sur la face du disque faisant face au rotor.

Selon une autre caractéristique de l'invention, le boîtier de distribution comporte un deuxième dispositif de sélection des graines excédentaires de chaque alvéole disposé sensiblement dans la partie supérieure dudit carter.

Selon un mode de réalisation de l'invention, la face d'appui du carter s'étend de la partie haute à la partie d'éjection des graines et ledit dispositif de sélection supplémentaire est constituée par une rampe aménagée à l'extrémité supérieure de la face d'appui du carter.

Selon une autre caractéristique de l'invention, chaque alvéole du rotor comporte une rampe oblique à son extrémité avant dans le sens de déplacement du rotor.

D'autres caractéristiques et avantages de l'invention ressortiront de la description qui suit d'un exemple de réalisation de l'invention, faite en se référant aux dessins ci-annexés sur lesquels :
- la figure 1 est une vue de l'intérieur du carter du boîtier de distribution,
- la figure 2 est une vue correspondant à la figure 1, le disque étant en place,
- la figure 3 est une vue correspondant à la figure 1 avec le disque et le rotor en place,
- la figure 4 est une vue en coupe suivant la ligne 4-4 de la figure 3,
- la figure 5 est une vue en perspective éclatée du carter, du disque et du rotor,
- la figure 6 est une vue en perspective éclatée montrant le disque et le rotor vue de l'intérieur, et
- les figures 7 à 9 sont des vues explicatives du boîtier de distribution conforme à la présente invention, la figure 7 représentant le rotor vue de l'intérieur et les figures 8 et 9 étant des coupes partielles suivant les lignes 8-8 et 9-9 de la figure 3.

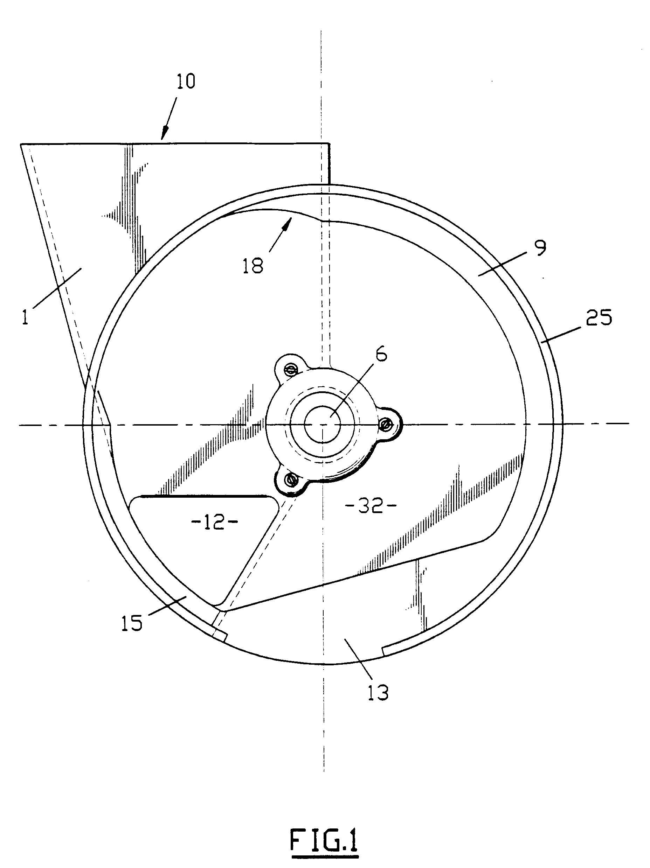

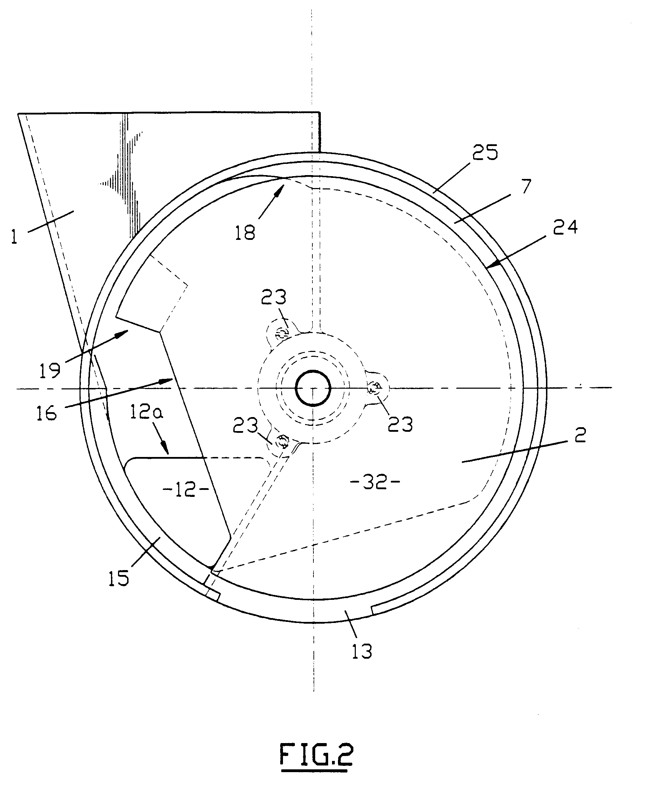

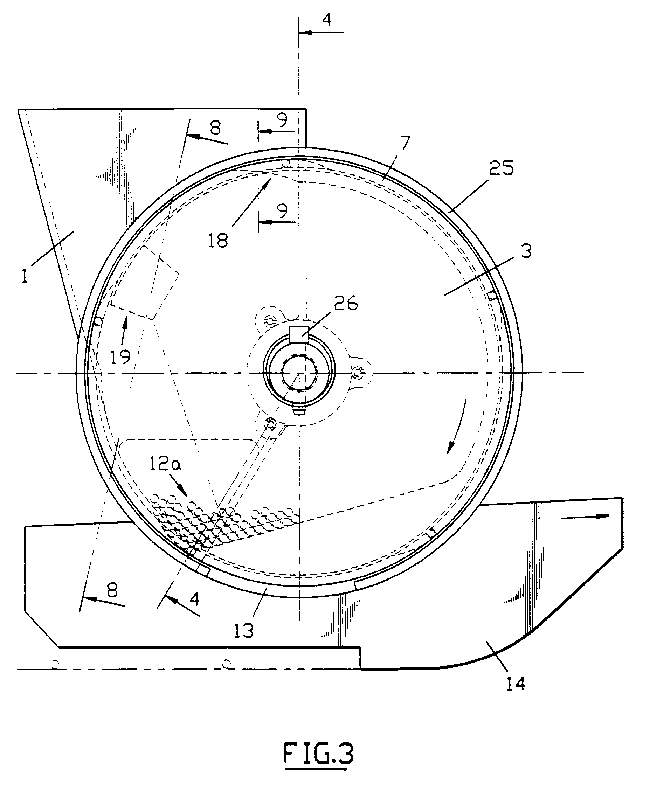

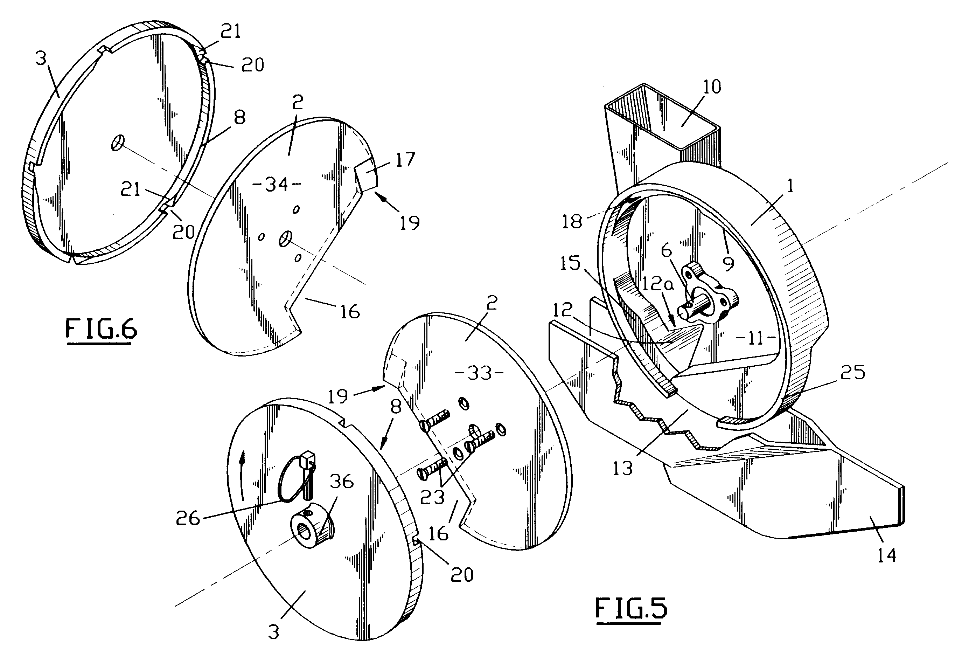

Comme on peut le voir sur les figures 1 à 6, le boîtier de distribution est essentiellement constitué de trois éléments, à savoir un carter 1 fixe, un disque 2 fixe et un rotor 3 tournant dans le sens des flèches indiquées en particulier sur les figures 3 et 5 à 7. Le carter 1 est de forme générale cylindrique, il comporte un fond vertical dans lequel est disposé à rotation un arbre d'entraînement 6. Ce carter 1 est alimenté en graines par une goulotte 10 reliée à une trémie d'alimentation non représentée. Par ailleurs, un soc 14 est fixé sous le carter 1 à l'avant du dispositif qui se déplace de la gauche vers la droite comme indiqué par une flèche sur la figure 3. Le carter 1 comporte une paroi cylindrique 25 et présente une ouverture 13 à la base du carter pour l'éjection des graines dans le soc 14; par ailleurs cette paroi cylindrique 25 supporte la goulotte 10 et présente au niveau de celle-ci, à sa partie supérieure, une ouverture permettant la descente des graines dans le carter.

Le carter 1 présente une face d'appui périphérique verticale 9 qui se raccorde à la paroi cylindrique 25 et est perpendiculaire à cette dernière. Cette face d'appui s'étend sensiblement de la partie supérieure du carter jusqu'à l'ouverture d'éjection 13. Dans sa partie basse, cette face d'appui constitue le fond 32 d'une chambre d'alimentation 11 s'étendant de ladite face d'appui 9 vers le fond du carter.

Dans la partie montante de cette chambre d'alimentation 11, un secteur incliné 15 canalise les graines et facilite leur accès aux alvéoles du rotor.

A sa partie supérieure, la face d'appui présente une rampe de sélection des graines 18.

Le disque 2 est coaxial au carter 1; il présente une ouverture centrale dessinée au passage de l'arbre d'entraînement 6 et il est fixé sur le carter 1 au moyen de vis 23 s'engageant, par exemple, dans le support du palier de l'arbre 6.

Ce disque 2 présente une échancrure 16 disposée au niveau de la partie montante du trajet des graines, sensiblement en regard du secteur incliné 15 du carter 1. Le bord de sortie, par rapport au sens de rotation du disque 3, de l'échancrure 16 comporte une rampe de sélection 17 dont la ligne de pente est sensiblement perpendiculaire au rayon du disque la traversant. Cette rampe s'étend du bord de sortie de l'échancrure 16 où elle constitue une arête 19 se trouvant sur la face 33 du disque faisant face au rotor 3. Cette rampe s'étend de cette arête 19 jusqu'à la face 34 opposée à la face 33 du disque 2.

Le rotor de distribution 3 a la forme d'un disque comportant une couronne cylindrique 8; il comporte, suivant une forme de réalisation, un moyeu 36 par l'intermédiaire duquel il est solidarisé avec l'arbre d'entraînement 6, par exemple au moyen d'une clavette 26. Le rotor 3 est entraîné en rotation par l'arbre 6 qui est solidaire d'un pignon 5 entraîné par un système d'entraînement à chaîne non représenté à une vitesse proportionnelle à la vitesse d'avancement du semoir.

Le rotor 3 comporte, à intervalles réguliers, des alvéoles 20 aménagées dans sa couronne périphérique et constituées par des encoches de cette dernière de manière que ces alvéoles 20 débouchent, d'une part, sur la partie extérieure de la couronne 8, et, d'autre part, sur la face intérieure de la couronne 8.

Avantageusement, on prévoit en avant de chaque alvéole 20 par rapport au sens de rotation du rotor 3 un chanfrein de préférence oblique 21 aménagé dans la face interne de la couronne 8.

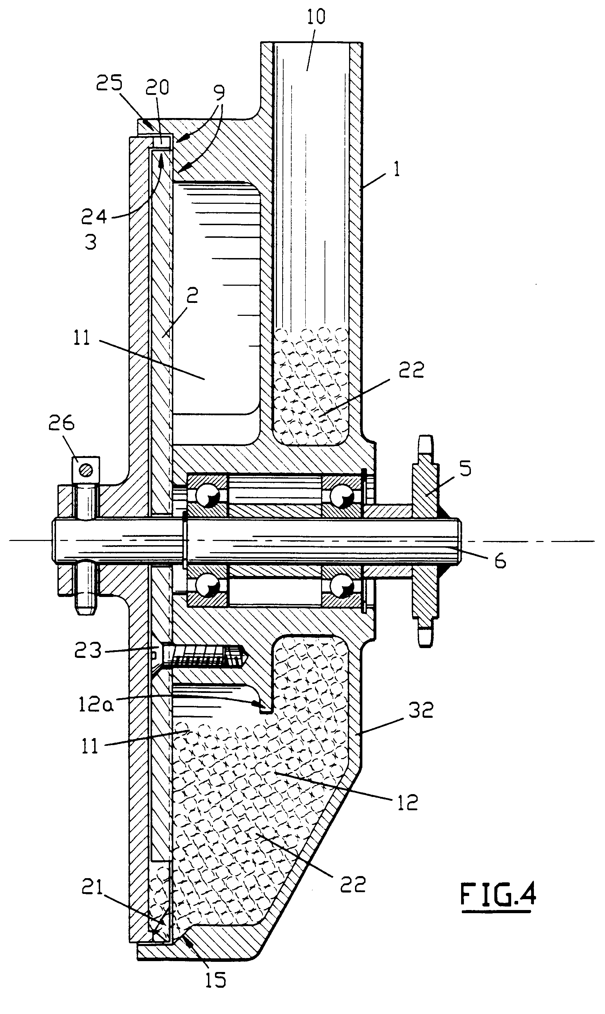

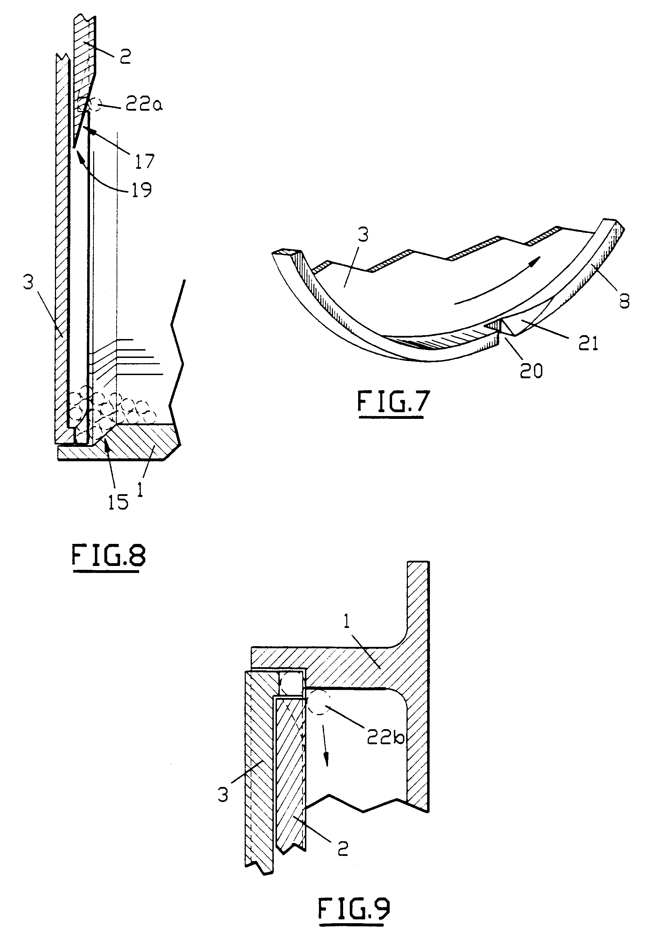

Le fonctionnement du distributeur qui vient d'être décrit est le suivant. On se réfèrera en particulier aux figures 3 et 4 qui représentent le boîtier de distribution lorsqu'il est assemblé et aux figures 7 à 9.

Les graines pénètrent dans la chambre d'alimentation 11 par la goulotte 10 et leur niveau se stabilise sensiblement au niveau 12a d'une fenêtre 12.

Dans la partie basse du boîtier, les graines qui se trouvent au contact du rotor 3 ont tendance à être entraînées et à rouler sur la couronne 8. Les graines qui se trouvent au niveau du secteur incliné 15 du carter 1 et du chanfrein oblique 21 des alvéoles 20 se trouvent guidées et sont automatiquement dirigées vers les alvéoles 20 dont les dimensions sont déterminées de manière à ne pouvoir normalement recevoir qu'une seule graine.

La force centrifuge engendrée par la vitesse de rotation élevée du rotor empêche les graines logées dans les alvéoles 20 de retomber et elles vont donc circuler dans le canal 9 jusqu'à l'orifice d'éjection 13 où, sous l'effet de la force centrifuge, les graines seront expulsées pour tomber par gravité dans le sillon creusé par le soc 14. La vitesse de rotation du rotor est suffisamment élevée pour que l'effet de la force centrifuge soit nettement plus important que l'effet d'entraînement du mouvement de rotation de la graine.

Lorsque les alvéoles atteignent le niveau de la rampe de sélection 17 du disque 2, (voir figure 8), l'arète 19 passe derrière chaque alvéole et la rampe 17 agit progressivement et chasse en douceur vers le côté ouvert de l'alvéole, c'est-à-dire vers l'intérieur du carter, une éventuelle deuxième graine 22a qui serait restée prisonnière dans l'épaisseur de la couronne 8. Ceci réalise donc une première sélection, c'est-à-dire une élimination des graines supplémentaire, dans laquelle les graines en excès sont évacuées horizontalement. En effet, le premier dispositif de sélection constitué par la rampe 17 est disposé sensiblement à la moitié de la course montante du trajet des graines.

Dans la partie haute du carter 1, les alvéoles atteignent ensuite la rampe 18 du carter 1 qui, à son tour, effectue une sélection progressive en éliminant vers le bas une éventuelle deuxième graine 22b (voir figure 9) qui serait restée prisionnère sur le côté de la première graine. On réalise ainsi une deuxième sélection verticale.

Grâce à ce double dispositif de sélection, on obtient une sélection efficace, si bien qu'il reste une seule graine dans chaque alvéole; cette graine circule dans le canal 7 jusqu'à l'ouverture d'éjection 13.

On voit que l'invention permet de réaliser une sélection très efficace des graines, même dans le cas de graines de forme irrégulière. Ceci est obtenu grâce au disque 2 et au double dispositif de sélection horizontale 17 et verticale 18.

La description qui suit n'a été fournie qu'à titre d'exemple nullement limitatif et il est évident que l'on peut y apporter des modifications ou variantes sans pour autant sortir du cadre de la présente invention telle que définie par les revendications.

En particulier, le premier dispositif de sélection horizontale peut être réalisé sur le carter 1.

Egalement, les rampes fixes progressives de sélection 17 et 18 pourraient être remplacées par des rampes souples ou par des brosses.

## Revendications

1. Boîtier de distribution pour semoir monograine mécanique, du type comportant un carter fixe (1) délimité par un fond sensiblement vertical et une paroi cylindrique (25) et un rotor (3) disposé dans ledit carter (1) au niveau de ladite paroi cylindrique (25) et monté à rotation dans ce dernier, ledit rotor (3) comportant une couronne cylindrique périphérique (8) dirigée vers l'intérieur du carter (1) et dans laquelle sont aménagées des alvéoles (20) destinées à recevoir chacune une graine et débouchant, d'une part, à l'extérieur de ladite couronne (8) et, d'autre part, à l'intérieur de ladite couronne (8), caractérisé en ce qu'il comporte un élément (2) présentant la forme générale d'un disque coaxial audit rotor (3) et fixé entre ledit rotor (3) et le fond du carter (1), en ce que le carter (1) présente, sur une partie de sa périphérie, une face d'appui intérieure (9) périphérique raccordée à ladite paroi cylindrique (25), orthogonale à cette dernière et sur laquelle s'appuie ledit disque (2), en ce que le diamètre externe dudit disque (2) est inférieur au diamètre interne du carter (1) au niveau de ladite face d'appui (9), de manière à délimiter avec ladite face d'appui (9) et ladite paroi cylindrique (25) du carter un canal annulaire (7) recevant la couronne cylindrique (8) du rotor (3), en ce que ledit disque (2) présente une échancrure (16) dans sa partie disposée dans la zone de montée des graines bloquées dans les alvéoles (20), et en ce que l'on prévoit au niveau de l'extrémité de sortie de ladite échancrure (16) un dispositif de sélection (17, 19) destiné à expulser les graines supplémentaires (22a) entraînées par les alvéoles (20).

2. Boîtier de distribution selon la revendication 1, caractérisé en ce que ledit dispositif de sélection (17, 19) est aménagé sur le disque (2).

3. Boîtier de distribution selon la revendication 2, caractérisé en ce que ledit disposition de sélection est constitué par une rampe (17) de pente sensiblement perpendiculaire au rayon du disque (2), s'étendant du bord de sortie (19) de l'échancrure (16) sur la face (33) du disque tournée vers le rotor (3) vers la face (34) du disque tournée vers le carter (1), de manière à présenter une arête sensiblement radiale (19) sur la face du disque (2) faisant face au rotor (3).

4. Boîtier de distribution selon la revendication 3, caractérisé en ce qu'il comporte un deuxième dispositif (18) de sélection des graines excédentaires de chaque alvéole (20) disposé sensiblement dans la partie supérieure dudit carter (1).

5. Boîtier de distribution selon la revendication 1, caractérisé en ce que la face d'appui (9) du carter s'étend de la partie haute à la partie d'éjection (13) des graines.

6. Boîtier de distribution selon les revendications 4 et 5, caractérisé en ce que ledit dispositif de sélection supplémentaire est constituée par une rampe aménagée (18) à l'extrémité supérieure de la face d'appui (9) du carter (1).

7. Boîtier de distribution selon la revendication 1, caractérisé en ce que chaque alvéole (20) du rotor comporte une rampe, de préférence oblique (21) à son extrémité avant dans le sens de déplacement du rotor (3).

## Claims

1. A distribution box for a mechanical seed spacing drill, of the type comprising a fixed casing (1) delimited by a substantially vertical base and a cylindrical wall (25) and a rotor (3) arranged in the casing (1) at the level of the cylindrical wall (25) and mounted for rotation in the cylindrical wall (25), the rotor (3) having a peripheral cylindrical collar (8) directed towards the inside of the casing (1) and in which are arranged cells (20), each of which is intended to receive a seed and opens, on the one hand, on the outside of the collar (8) and, on the other hand, on the inside of the collar (8), characterised in that it has an element (2) having the general shape of a disc coaxial with the rotor (3) and fixed between the rotor (3) and the base of the casing (1), in that the casing (1) has, on a portion of its periphery, a peripheral inner supporting surface (9) connected and orthogonal to the cylindrical wall (25) on which the disc (2) is supported, in that the external diameter of the disc (2) is less than the internal diameter of the casing (1) at the level of the supporting surface (9), so as to delimit, with the supporting surface (9) and the cylindrical wall (25) of the casing, an annular channel (7) receiving the cylindrical collar (8) of the rotor (3), in that the disc (2) has a cut-out (16) in its portion arranged in the area for raising the seeds locked in the cells (20), and in that a selection device (17, 19) intended to expel the additional seeds (22a) carried along by the cells (20) is provided at the level of the exit end of the cut-out (16).

2. A distribution box according to claim 1, characterised in that the selection device (17, 19) is arranged on the disc (2).

3. A distribution box according to claim 2, characterised in that the selection device is constituted by a ramp (17), the slope of which is substantially perpendicular to the radius of the disc (2), extending from the exit edge (19) of the cut-out (16) on the surface (33) of the disc turned towards the rotor (3) to the surface (34) of the disc turned towards the casing (1) so as to present a substantially radial ridge (19) on the surface of the disc (2) facing the rotor (3).

4. A distribution box according to claim 3, characterised in that it comprises a second device (18) for selecting excess seeds from each cell (20) arranged substantially in the upper portion of the casing (1).

5. A distribution box according to claim 1, characterised in that the supporting surface (9) of the casing extends from the top portion to the seed ejection portion (13).

6. A distribution box according to claims 4 and 5, characterised in that the additional selection device is constituted by a ramp (18) arranged at the upper end of the supporting surface (9) of the casing (1).

7. A distribution box according to claim 1, characterised in that each cell (20) of the rotor comprises a ramp, preferably oblique (21) at its front end in the direction of movement of the rotor (3).

## Patentansprüche

1. Verteilungsgehäuse für mechanische Einzelkorndrillmaschine des Typs mit einem festen Kasten (1), der durch einen im wesentlichen vertikalen Boden und durch eine zylindrische Wand (25) begrenzt ist, und einem Rotor (3), der im Kasten (1) auf Höhe der zylindrischen Wand (25) angeordnet und in diesem letzteren drehbar angebracht ist, wobei der Rotor (3) einen zylindrischen Umfangskranz (8) enthält, der zum Innenraum des Kastens (1) gerichtet ist und in dem Zellen (20) ausgebildet sind, die dazu vorgesehen sind, jeweils ein Korn aufzunehmen, und einerseits in die äußere Umgebung des Kranzes (8) und andererseits in den Innenraum des Kranzes (8) münden, dadurch gekennzeichnet, daß es ein Element (2) enthält, das die allgemeine Form einer zum Rotor (3) koaxialen Scheibe besitzt und zwischen dem Rotor (3) und dem Boden des Gehäuses (1) befestigt ist, daß der Kasten (1) auf einem Teil seines Umfangs eine innere Umfangsabstützfläche (9) aufweist, die mit der zu ihr senkrechten zylindrischen Wand (25) verbunden ist und auf der sich die Scheibe (2) abstutzt, daß der Außendurchmesser der Scheibe (2) auf Höhe der Abstützfläche (9) kleiner als der Innendurchmesser des Kastens (1) ist, so daß durch die Abstützfläche (9) und die zylindrische Wand (25) des Kastens ein ringförmiger Kanal (7) begrenzt wird, der den zylindrischen Kranz (8) des Rotors (3) aufnimmt, daß die Scheibe (2) in ihrem Teil, der sich in der Zone befindet, in der sich die in den Zellen (20) eingesperrten Körner nach oben bewegen, eine Aussparung (16) aufweist und daß auf Höhe des Auslassendes der Aussparung (16) eine Auswahlvorrichtung (17, 19) vorgesehen ist, die dazu bestimmt ist, die zusätzlichen Körner (22a), die durch die Zellen (20) mitgenommen werden, auszuwerfen.

2. Verteilungsgehäuse nach Anspruch 1, dadurch gekennzeichnet, daß die Auswahlvorrichtung (17, 19) in der Scheibe (2) ausgebildet ist.

3. Verteilungsgehäuse nach Anspruch 2, dadurch gekennzeichnet, daß die Auswahlvorrichtung durch eine Rampe (17) gebildet ist, deren Steigung zum Radius der Scheibe (2) im wesentlichen senkrecht ist und die sich vom Rand des Auslasses (19) der Aussparung (16) in der dem Rotor (3) zugewandten Fläche (33) der Scheibe zu der dem Kasten (1) zugewandten Fläche (34) der Scheibe erstreckt, so daß sie auf der dem Rotor (3) gegenüberliegenden Fläche der Scheibe (2) einen im wesentlichen radialen Anschlag (19) aufweist.

4. Verteilungsgehäuse nach Anspruch 3, dadurch gekennzeichnet, daß es eine zweite Auswahlvorrichtung (18) für überschüssige Körner jeder Zelle (20) aufweist, die im wesentlichen im oberen Teil des Kastens (1) angeordnet ist.

5. Verteilungsgehäuse nach Anspruch 1, dadurch gekennzeichnet, daß sich die Abstützfläche (9) des Kastens vom oberen Abschnitt zum Auswurfabschnitt (13) für die Körner erstreckt.

6. Verteilungsgehäuse nach den Ansprüchen 4 und 5, dadurch gekennzeichnet, daß die zusätzliche Auswahlvorrichtung durch eine Rampe (18) gebildet ist, die im oberen Ende der Abstützfläche (9) des Kastens (1) ausgebildet ist.

7. Verteilungsgehäuse nach Anspruch 1, dadurch gekennzeichnet, daß jede Zelle (20) an ihrem vorderen Ende in Richtung der Bewegung des Rotors (3) eine vorzugsweise schräge Rampe (21) aufweist.
